# EUROPÄISCHE PATENTANMELDUNG

(11) **EP 2 442 544 A2**
(43) Veröffentlichungstag der Anmeldung: **18.04.2012**
(21) Anmeldenummer: 11184168.0
(22) Anmeldetag: 06.10.2011
(51) Int. Cl.: H04N 1/00

(54) **Einrichtung zum selbstauslösenden erzeugen von personen-fotografien**

(30) Priorität: 13.10.2010 CH 16712010
(71) Anmelder: Wetli, Marc, 8032 Zürich (CH)
(72) Erfinder: Wetli, Marc, 8032 Zürich (CH)
(74) Vertreter: Felber, Josef

(57) **Zusammenfassung**

Die Einrichtung ist aus Modulen aufgebaut. Diese enthalten eine Kamera vor welcher ein halbdurchlässiger Spiegel (4) schiefwinklig angeordnet ist, einen Bildschirm (9) für das Aufnahmebild der Kamera, dessen Ebene seitlich verschobenen parallel zur Kamera-Linsenachse angeordnet ist, sodass der halbdurchlässige Spiegel (4) den Bildschirm (9) in Blickrichtung der zu fotografierenden Person abbildet und daher für diese Person einsehbar ist, und einen Selbstauslöser in Form eines am Ort der zu fotografierenden Person befindlichen Schalters (32). Als Besonderheit besteht die Einrichtung aus mindestens zwei passgenau unverrückbar aufeinander aufsetzbaren kastenförmigen Modulen (1,2), wobei das obere (1) auf seiner Frontseite (2) einsehbar im Innern den halbdurchlässigen Spiegel (4) enthält, welcher sich von der oberen Vorderkante (5) des kastenartigen Moduls (1) schiefwinklig zur hinteren Unterkante (6) des kastenartigen Moduls (1) erstreckt. Hinter diesem halbdurchlässigen Spiegel (4) ist die Kamera mit Blickrichtung durch das Zentrum der Moduls (1) nach vorne angeordnet. Auf dem Boden (8) des Moduls (1) ist der Bildschirm (9) mit Bild nach oben gerichtet angeordnet. Das untere Modul (2) weist eine diffus lichtdurchlässige Frontwand (11) auf, und im Innern dieses unteren Moduls (2) ist mindestens ein Blitzlicht-Erzeuger angeordnet. Die Module (1,2) sind auf ihrer Aussenseite elektrisch für Netzstrom, Steuer- und Datenstrom verbindbar, sodass die Bilder vom kamerainternen Speicher aus wahlweise über ihre Multimedia-Schnittstelle (HDMI) direkt in den Bildschirm (9) oder an einen Rechner übermittelbar sind.

## Beschreibung

Diese Erfindung betrifft eine Einrichtung zum selbstauslösenden Erzeugen von Personen-Fotografien. Die Praxis des Portrait-Fotografen zeigt, dass es nicht einerlei ist, ob eine Fotografie von einem Fotografen geknipst wird, der im Blickfeld der aufzunehmenden Personen oder Personengruppe steht, oder ob die Fotografie ohne Anwesenheit eines Fotografen entsteht. Viele Menschen werden durch die Anwesenheit des Fotografen nämlich verändert und zeigen nicht ihre ganz natürliche, unverkrampfte und entspannte Erscheinung. Wohl sind professionelle Aufnahmen in Bezug auf Beleuchtung und Aufnahmeeinstellungen der Kamera von besonders hoher Qualität, jedoch verliert die Erscheinung bei vielen Personen wegen der Anwesenheit des professionellen Fotografen ein stückweit an Natürlichkeit. Wesentlich anders erweist es sich, wenn Personen oder Personengruppen von einer Selbstauslöser-Kamera aufgenommen werden.

Viele Kameras weisen eine Selbstauslöse-Einrichtung auf, aber eignen sich dennoch nicht für eine professionelle Fotoaufnahme. Es gibt Einrichtungen zum selbstauslösenden Erzeugen von Passfotos, aber erstens haben sie nicht zum Ziel und Zweck, eine professionelle Portrait- oder Gruppenfotografie zu liefern, denn sie bieten nicht die hierzu notwendige Technik, noch sind diese Fotoautomaten geeignet, mobil und überall rasch eingesetzt werden zu können. Schliesslich ist deren Bedienung nicht so flexibel in Bezug auf die Kameraeinstellungen, auf die gewählte Beleuchtung, die Fotografier-Richtung etc, und nicht so narrensicher in der Bedienung, dass damit professionelle Aufnahmen gemacht werden könnten. Die bekannten Einrichtungen erlauben es auch nicht, das Ergebnis, also die erzeugte Fotografie, unmittelbar nach der Aufnahme in guter Auflösung und effektiver Aufnahmequalität zu präsentieren, sodass eine Kontrolle der gemachten Aufnahme sofort möglich ist und allenfalls weitere Aufnahmen in Sekundenschnelle gemacht werden können.

Der Nachteil der bekannten Einrichtungen liegt in der Tatsache, dass die Regulierung der Position der aufzunehmenden Person immer nur ungefähr und selten zufriedenstellend ist, da die Selbstkontrolle des gewählten Bildausschnitts und des Gesamteindrucks der Fotografie durch die zu fotografierende Person nicht möglich ist. Es wurden Einrichtungen zum Selbstfotografieren vorgeschlagen, die ausserdem mit einer Video-Kamera versehen sind, welche an einen Bildschirm angeschlossen ist, wodurch die Betrachtung der Fotografie vor ihrer Aufnahme durch die aufzunehmende Person ermöglicht werden soll. Dieser Bildschirm ist in der Regel im Bereich der Trennwand der Kabine positioniert, welche das Bildaufnahmesystem aufweist, jedoch in Bezug auf die optische Achse dieses Systems versetzt. In dem Moment, in dem die Person mit dem aufzunehmenden Foto, welches sie auf dem Bildschirm sieht, zufrieden ist, betätigt sie mittels eines Bedienungsorgans eine Fotokamera, wobei das Abziehen auf traditionelle Weise erfolgt. Man erkennt leicht, dass auf diese Weise das erhaltene Abbild nicht zufriedenstellend sein kann, weist ja die Person auf dem genannten Bildschirm das Foto vor der Aufnahme kontrolliert und daher nicht in die optische Achse des Aufnahmesystems blickt. Aufgrund der Tatsache, dass der Bildschirm nicht auf diese optische Achse ausgerichtet ist, wird das erhaltene Foto ein versetztes Profil der Person darstellen (siehe zum Beispiel die Druckschrift EP-A-0 269 022).

Um diesem Nachteil zu überwinden, wurde insbesondere in der Druckschrift US-A-4 864 410 vorgeschlagen, die Fotografie auf digitale Weise mittels einer Video-Kamera aufzunehmen und das so aufgenommene Foto auf einem Video-Bildschirm wiederzugeben, der auf der optischen Achse der Kamera angeordnet ist. Um nicht mit der Bildaufnahme zu interferieren, ist der Video-Bildschirm tatsächlich im Winkel von 90° zur optischen Achse der Kamera angeordnet, wobei sein Bild virtuell auf dieser optischen Achse mittels eines semitransparenten Spiegels platziert wird, der im Winkel von 45° zu dieser Achse orientiert ist. Auf diese Weise ist der Benutzer in die Lage versetzt, sein Bild zu betrachten, während er exakt zur Kamera ausgerichtet bleibt, welche nach der anschliessenden Behandlung eine Fotografie ausgibt. Obwohl diese Vorrichtung sehr wohl eine erhebliche Verbesserung der Qualität in Bezug auf den Bildausschnitt und die Selbstkontrolle der hergestellten Aufnahmen ermöglicht, hat der Benutzer aber nicht die Möglichkeit, den präzisen Aufnahmemoment zu wählen, da die Auslösung der Aufnahme immer noch durch den Apparat erfolgt.

Um diese Auslösung auf den Benutzer zu übertragen, wurde dann in FR-A-2 665 315 vorgeschlagen, eine automatische Vorrichtung zu schaffen, bei der eine gewisse Anzahl von Aufnahmen hergestellt wird und anschließend dem Benutzer auf einem Video-Bildschirm vorgeschlagen wird. Der Benutzer führt eine Wahl mittels einer Wählvorrichtung durch, um das Abziehen der Aufnahme seiner Wahl zu erhalten. Obwohl eine Verbesserung in bezug auf die Selbstkontrolle durch den Benutzer festzustellen ist, ermöglicht diese Vorrichtung immer noch nicht, dass die Fotografie in dem durch den Benutzer gewollten Augenblick erfolgt, das heißt, wenn er auf einem Video-Bildschirm das Bild erblickt, das ihm gefällt.

Aufgabe der Erfindung ist es, die unterschiedlichen Nachteile zu vermeiden und eine Einrichtung zum selbstauslösenden Erzeugen von Personen-Fotografien zu schaffen, welche erstens leicht transportierbar ist, zweitens anlässlich von Veranstaltungen in Freien oder in Gebäuden rasch und leicht aufstellbar ist, und die drittens geeignet dazu ist, Portrait- und Gruppenfotos von Personen in professioneller Qualität zu erzeugen, wobei diese Aufnahmen durchwegs ferngesteuert ausgelöst werden. Die Einrichtung soll auch in allen beliebigen Aufnahme-Richtungen eingesetzt werden können, und einfach und narrensicher in der Bedienung sein.

Diese Aufgabe wird gelöst von einer Einrichtung zum selbstauslösenden Erzeugen von Personen-Fotografien, mit einer Kamera, vor welcher ein halbdurchlässiger Spiegel schiefwinklig angeordnet ist, einem Bildschirm für das Aufnahmebild der Kamera, dessen Ebene seitlich verschobenen parallel zur Kamera-Linsenachse angeordnet ist, sodass der halbdurchlässige Spiegel den Bildschirm in Blickrichtung der zu fotografierenden Person abbildet und daher für diese Person einsehbar ist, und einem Selbstauslöser in Form eines am Ort der zu fotografierenden Person befindlichen Schalters,
*und die sich dadurch auszeichnet, dass*
dass die Einrichtung aus mindestens zwei passgenau unverrückbar aufeinander aufsetzbaren kastenförmigen Modulen besteht, wobei das obere auf seiner Frontseite einsehbar im Innern den halbdurchlässigen Spiegel enthält, welcher sich von der oberen Vorderkante des kastenartigen Moduls schiefwinklig zur hinteren Unterkante des kastenartigen Moduls erstreckt, und hinter diesem halbdurchlässigen Spiegel die Kamera mit Blickrichtung durch das Zentrum der Moduls nach vorne angeordnet ist, auf dem Boden des Moduls der Bildschirm mit Bild nach oben gerichtet angeordnet ist, und hinter dem halbdurchlässigen Spiegel ausserdem ein Rechner zur Steuerung der Einrichtung und zur Verarbeitung und Speicherung der aufgenommen Bilder angeordnet ist, und dass das untere Modul eine diffus lichtdurchlässige Frontwand aufweist, und im Innern dieses unteren Moduls mindestens ein Blitzlicht-Erzeuger angeordnet ist, und dass die Module auf ihrer Aussenseite elektrisch für Netzstrom, Steuer- und Datenstrom verbindbar sind.

Anhand der Zeichnungen wird diese Einrichtung näher beschrieben. Die Funktion ihrer einzelnen Komponenten und Teile wird erläutert sowie ihr praktischer Einsatz wird erläutert.
Es zeigt:
- Figur 1:: Die Einrichtung aufgestellt und von schräg vorne gesehen, zur Aufnahme einer vor der Einrichtung sitzenden Person;
- Figur 2:: Die Einrichtung aufgestellt und von schräg hinten gesehen, zur Aufnahme einer vor der Einrichtung sitzenden Person;
- Figur 3:: Die Einrichtung mit einem zusätzlichen fahrbaren Unterstell-Modul und mit Beleuchtungsschirm von schräg vorne gesehen, zur Aufnahme eines vor der Einrichtung stehenden Paares;
- Figur 4:: Die Einrichtung mit einem zusätzlichen fahrbaren Unterstell-Modul und mit Beleuchtungsschirm von schräg hinten gesehen, zur Aufnahme eines vor der Einrichtung stehenden Paares;
- Figur 5:: Die Einrichtung mit dem zusätzlichen Unterstell-Modul von der Seite her gesehen, ohne Seitenwände, zum Einblick ins Innere der Module;
- Figur 6:: Die Anordnung der für die Aufnahme wesentlichen Bestandteile, nämlich Kamera, halbdurchlässiger Spiegel, Bildschirm, Computer und Auslöseeinrichtung;
- Figur 7:: Die Einrichtung aus drei Modulen von schräg hinten gesehen, mit geöffneten Hinterseiten, sodass der Blick ins Innere der Module freigegeben ist;
- Figur 8:: Die drei Module leicht voneinander abgehoben dargestellt;
- Figur 9:: Eine vergrösserte Darstellung der Zentrier- und Verbindevorrichtung für zwei aufeinanderstehende Module.

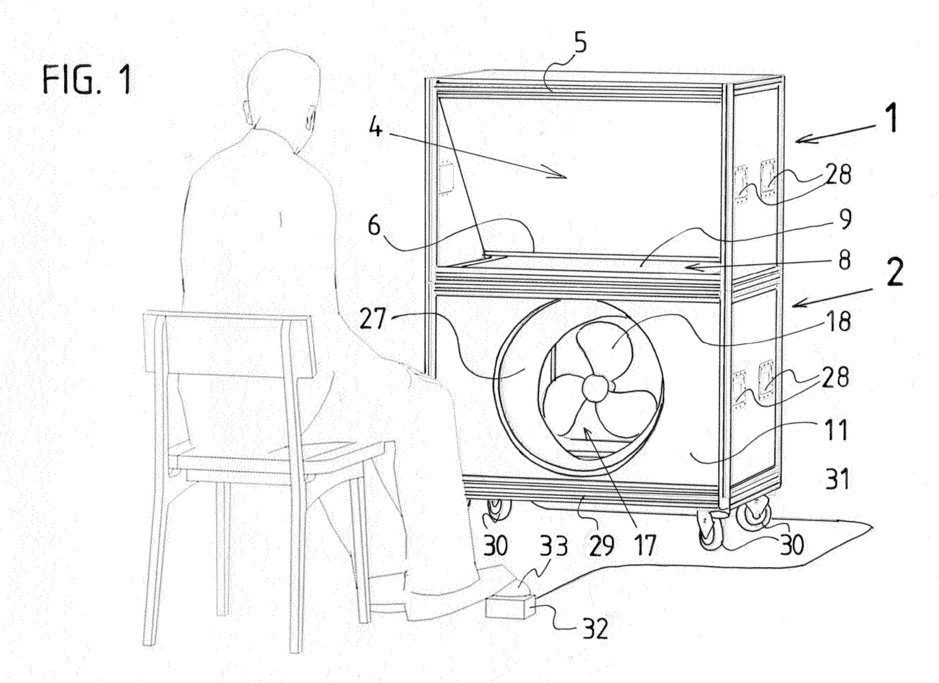

In Figur 1 ist Einrichtung aufgestellt und von schräg vorne gesehen gezeigt, bei der Aufnahme einer vor der Einrichtung sitzenden Person. Die Einrichtung besteht hier aus zwei passgenau unverrückbar aufeinander aufsetzbaren kastenförmigen Modulen 1,2. Diese Module sind vorzugsweise aus Aluminiumprofilen gefertigt, welche auf mindestens zwei aneinander anliegenden Seiten eine T-förmige oder U-förmige Nut aufweisen. Es gibt Standard-Profile mit solchen T-förmigen Nuten auf allen vier Seiten. Die Seitenwände können somit passgenau in diese Nuten aufgenommen werden. Als Seitenwände können Sperrholzplatten, Kunststoff-Platten oder Verbundplatten aus Aluminium und Kunststoff dienen. Das obere Modul 1 in seinem Inneren einen halbdurchlässigen Spiegel 4 enthält, welcher sich von der oberen Vorderkante 5 des kastenartigen Moduls 1 schiefwinklig zur hinteren Unterkante 6 des kastenartigen Moduls 1 erstreckt. Hinter diesem halbdurchlässigen Spiegel 4 ist eine Kamera mit Blickrichtung durch das Zentrum des Moduls 1 nach vorne gerichtet angeordnet. Auf dem Boden 8 des Moduls 1 ist ein Bildschirm 9 mit Bild nach oben gerichtet angeordnet, und hinter dem halbdurchlässigen Spiegel 4 ist ausserdem eine hier nicht sichtbare Rechnereinheit zur Steuerung der Einrichtung und zur Verarbeitung und Speicherung der aufgenommen Bilder angeordnet.

Das untere Modul 2 weist eine lichtdurchlässige Frontwand 11 mit lichtstreuendem Effekt auf, und im Innern dieses unteren Moduls 2 ist mindestens ein Blitzlicht-Erzeuger hinter der Frontwand 11 angeordnet ist. Diese beiden Module 1,2 sind auf ihrer Aussenseite elektrisch verbindbar. Ausserdem sind sie so konstruiert, dass sie unverrückbar aufeinander gestellt werden können und optional auch miteinander verbindbar sind, etwa mittels Schraubverbindungen oder mittels Schnallen, wie das noch genauer gezeigt wird. Die Frontseite 11 des Moduls 2 weist eine Öffnung 17 auf, ab welcher sich ein Rohrabschnitt 27 leicht abfallend nach hinten erstreckt, und am hinteren Ende dieses Rohrabschnittes 27 ist ein elektrischer Ventilator 18 mit Rotationsachse in Richtung des Rohrabschnittes 27 ausgerichtet installiert, zur Erzeugung von Wind. Dieser Wind kann bedarfsweise eingeschaltet und in seiner Stärke reguliert werden, damit er mit den Kleidern und den Haaren der aufzunehmenden Personen spielt, zum Erzeugen besonderer Effekte. Die Module 1,2 sind an ihren Seitenwänden mit Traggriffen 28 ausgerüstet, sodass sie von zwei Personen leicht getragen und verschoben werden können, und auch leicht aufeinander abgestellt werden können.

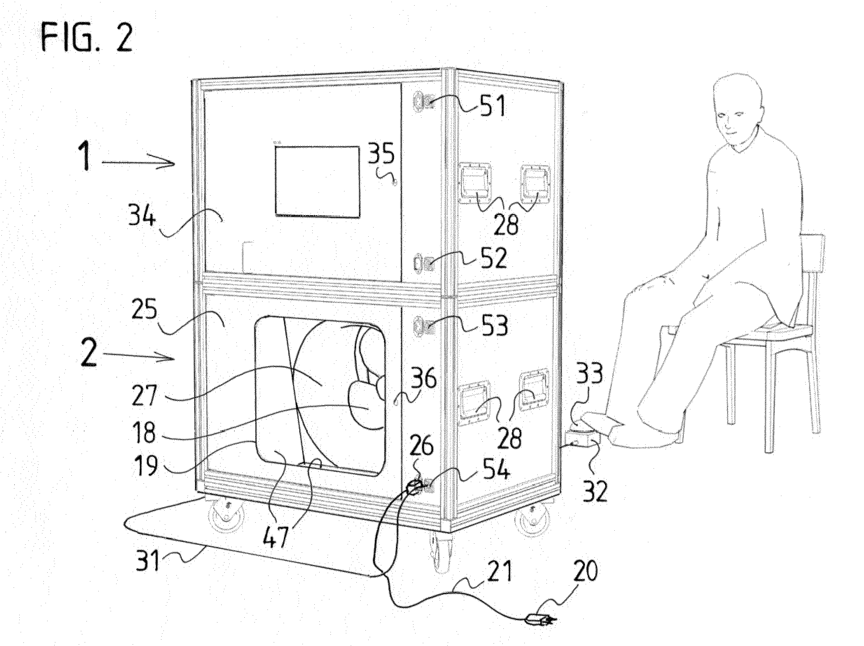

Unter dem hier unteren Modul 2 ist ein Fahrwerksrahmen 29 angeordnet, der an seinen Ecken je mit einem frei gelenkten Rad 30 ausgerüstet ist. Ein Kabel 31 führt von der Kamera im Innern des Moduls 1 zu einem Selbstauslöser 32 mit Fusstaste 33. Wie im Bild gezeigt, sitzt hier eine Einzelperson auf einem Stuhl vor der Einrichtung. Sie blickt in den halbdurchlässigen Spiegel 4, hinter welchem sich die Kamera befindet. Dem Betrachter wird vermittelt, er schaue in einen Spiegel. Das Bild wird also nicht spiegelverkehrt auf dem Bildschirm ausgegeben, sondern so, wie es die Kamera sieht. Der Betrachter sieht es dann allerdings spiegelverkehrt, wenn er in den halbdurchlässigen Spiegel blickt.[0012] Die Figur 2 zeigt diese Einrichtung von schräg hinten gesehen, zur Aufnahme der vor der Einrichtung sitzenden Person. Die Hinterseite des unteren Moduls 2 ist mit einer Öffnung 19 versehen, die zum Ansaugen von Luft für den Ventilator 18 dient, zur Erzeugung des Luftstromes, der dann durch den Rohrabschnitt 27 nach vorne herausgeblasen wird. Der Ansaugkanal wird durch die Leitbleche 47 gebildet. Die beiden Module 1,2 sind elektrisch verbindbar, wozu sie mit Steckerdosen 23,24 ausgerüstet sind. Mit einem kurzen Kabelabschnitt, der beidseits mit Steckern versehen ist, kann dann höchst einfach die elektrische Verbindung für Netzstrom von der Steckerdose 24 zur Steckerdose 23 erstellt werden. Nahe am unteren Rand des unteren Moduls 2 tritt ein Netzkabel 21 mit endseitigem Netzstecker 20 aus. Mit diesem Netzstecker 20 wird Netzstrom von einer nahe gelegenen Stromdose bezogen. Das etwa 5 Meter lange Netzkabel 21, welches beidenends mit einem Stecker ausgerüstet ist, wird an die Steckerdose 26 unten am Modul 2 angeschlossen und sein Stecker 20 am anderen Ende in die Netzdose gesteckt. Alternativ kann das Netzkabel 21 auch ins Innere des unteren Moduls 2 führen und dort zu einer federbelastete Kabelrolle, wie das bei Staubsauger-Geräten üblich ist. Das steckerseitige Ende des Kabels lässt sich dann federbelastet aus dem Modul herausziehen.

Diese Module 1,2 weisen ausserdem je eine weitere Steckerdose 51,52; 53,54 für Schwachstrom auf. Durch Verbindung der Steckerdose 52 mit der Steckerdose 53 lassen sich die elektrisch gesteuerten Komponenten im Innern der beiden Module durch einfaches Verbindung mit einem Kabelabschnitt mit entsprechend belegten Steckern höchst einfach und ohne weitere Kenntnisse narrensicher erstellen. Am unteren Steuerstecker 54 wird dann das Auslöserkabel eingesteckt. Alle nötigen Netzstrom- und Schwachstrom-Verbindungen sind dann erstellt und die Einrichtung ist betriebsbereit ist. Die Rückwände beider Module 1,2 sind hier mit links angeschlagenen Türen 25,34 ausgerüstet, welche mittels je eines Schlosses 35,36 mit Schlüssel verschliessbar sind. Durch das Öffnen der Türen 25,34 wird der Zugriff auf die inneren Bauteile gewährt, sodass diese bei Bedarf leicht ausgetauscht werden können, oder Manipulationen an denselben durchgeführt werden können.

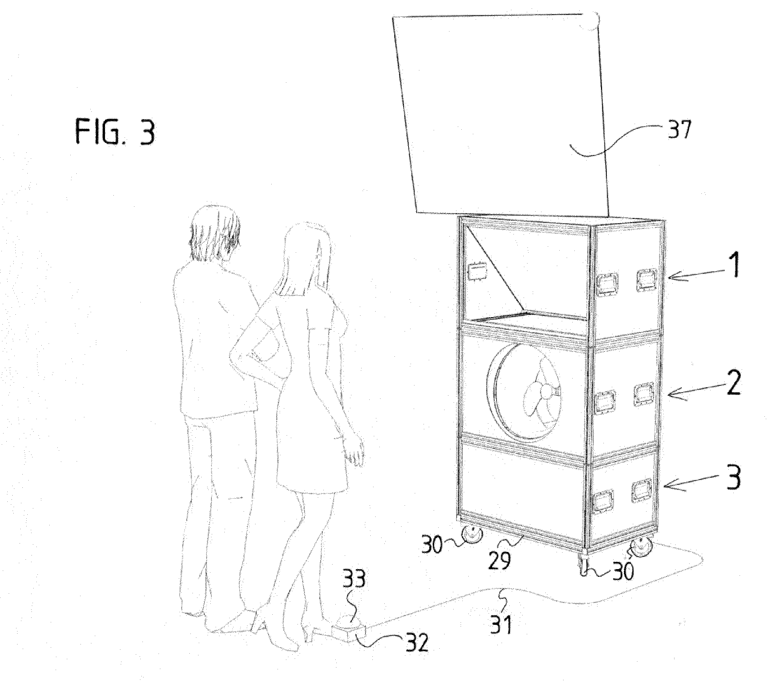

Die Figur 3 zeigt die Einrichtung mit einem zusätzlichen fahrbaren Unterstell-Modul 3 und mit Beleuchtungsschirm 37 von schräg vorne gesehen, zur Aufnahme eines vor der Einrichtung stehenden Paares. In diesem Fall ist das Modul 2 einfach auf dieses zusätzliche Modul 3 abgestellt. Das Unterstell-Modul 3 dient dazu, für die Aufnahme von stehenden Personen die Kamera auf die ideale Höhe zu bringen, das heisst auf Augenhöhe. Es ist dann dieses Unterstell-Modul 3, welches in diesem Fall auf dem Fahrwerksrahmen 29 mit seinen Rädern 30 ruht, sodass die ganze Einrichtung hernach leicht verschiebbar ist.

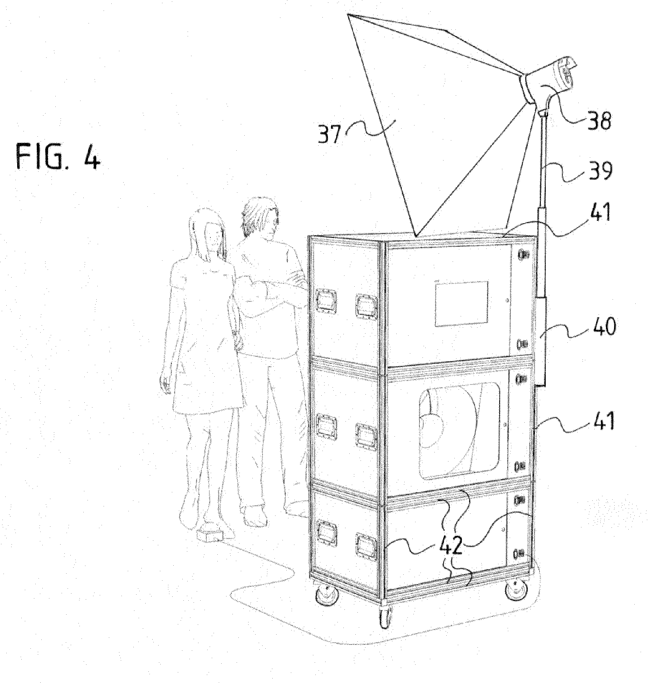

In Figur 4 sieht man diese Einrichtung nach Figur 3 von schräg hinten. Der Beleuchtungsschirm 37 mit seiner Lampe 38 ruht auf einem teleskopisch ausziehbaren Ständer 39, der über eine Halterung 40 an der Aussenkante eines der Module 1,2 befestigbar ist. Die Aussenkanten der Module 1-3 bestehen hierzu vorteilhaft aus Alu-Profilen 41 mit rechteckigem oder quadratischem Querschnitt und mit in ihren Profilseiten eingelassenen Nuten 42, die im Querschnitt T-.förmig sind, wobei auch andere Nut-Querschnitte denkbar sind. In diese Nuten 42 können von der Stirnseite der Profile aus Schraubenmuttern eingeschoben werden, die dann darin gegen ein Verdrehen gesichert sind, sodass an beliebigen Stellen Schrauben eingeschraubt werden können, die dann mit solchen Schraubenmuttern verspannt werden.

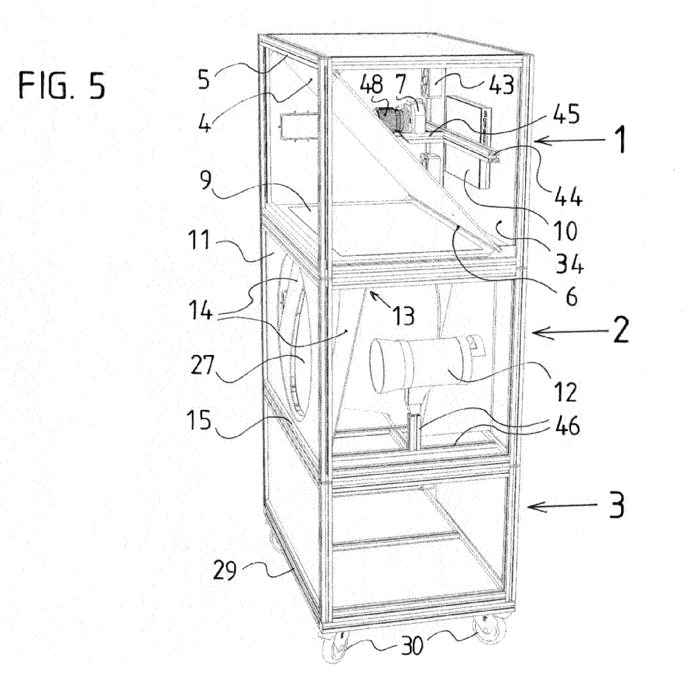

Die Figur 5 gibt den Blick ins Innere der Einrichtung frei, indem hier die Seitenwände entfernt sind. Im oberen Modul 1 erkennt man den horizontalen Bildschirm 9 auf dem Boden des Moduls 1, sowie den schiefwinklig zum Boden angeordneten halbdurchlässigen Spiegel 4, der sich von der vorderen Oberkante 5 des Moduls 1 zur unteren Hinterkante 6 des Moduls 1 erstreckt. Hinter dem halbdurchlässigen Spiegel 4 ist eine Halterung durch ein an der Innenseite des Moduls angebautes Profil 44 eingebaut. Von diesem Profil 44 zweigt ein weiteres Profil 45 rechtwinklig nach vorne ab und bildet eine Halterung für die Kamera 7, die mit dem jeweils gewünschten Objektiv 48 ausgerüstet auf dieser Halterung lösbar befestigt ist. Hinter dem Profil 44 erkennt man die Rechnereinheit 10, die auf der Innenseite der Rückwandtüre 34 des Moduls 1 befestigt ist. In dieser Rechnereinheit 10 erfolgt die Verarbeitung der aufgenommenen Bilder, sodass diese hernach am Bildschirm 9 so ausgegeben werden, wie sie die Kamera effektiv sieht. Im Innern des Moduls 1 sind weiter Steckergehäuse 43 für alle nötigen elektrischen Verbindungen der Einrichtung angeordnet. Dieses stets oberste Modul 1 ruht hier auf dem Modul 2, welches einen Blitzlicht-Erzeuger 12 enthält. Dieser Blitzlichterzeuger 12 ist auf einer Halterung 46 aus gleichen Profilen aufgebaut und nach vorne gegen die diffus lichtdurchlässige Frontwand 11 des Moduls 2 gerichtet. Als Besonderheit weist dieses Modul 2 hinter der vorderen, senkrecht zum Boden des Moduls 2 stehenden, diffus lichtdurchlässigen Frontwand 11 noch eine diffus lichtdurchlässige Scheibe 14 auf, welche jedoch leicht, das heisst um 10 bis 30 Grad nach hinten geneigt angeordnet ist, das heisst ihr unterer Rand 15 verläuft längs der vorderen Unterkante 5 des Moduls 2 und ihr oberer Rand 16 ist gegenüber der Oberkante des Moduls 2 zurückversetzt. Durch diese Massnahme wird das Blitzlicht des Blitzlichterzeugers 12 noch besser gegen oben gestreut. Es versteht sich, dass diese geneigte diffus lichtdurchlässige Scheibe 14 ein ovales Loch aufweisen muss, weil sie den Rohrabschnitt 27 für die Ventilatorluft nicht in einem rechten Winkel zur Rohrabschnitts-Achse umschliesst. Auf der gegenüberliegenden Seite des Rohrabschnittes 27 ist ein ebensolcher Blitzlicht-Erzeuger 12 in gleicher Weise angeordnet. Das hier unterste Modul 3 ist im gezeigten Beispiel leer und dient bloss zur Erhöhung der Kameraposition, wenn stehende Personen oder Personengruppen fotografiert werden sollen, was im Rahmen von Anlässen der Regelfall sein wird. Für die Aufnahme von sitzenden Personen wird dann dieses unterste Modul 3 einfach entfernt und das mittlere Modul 2 wird direkt auf den Fahrwerksrahmen 29 aufgesetzt.

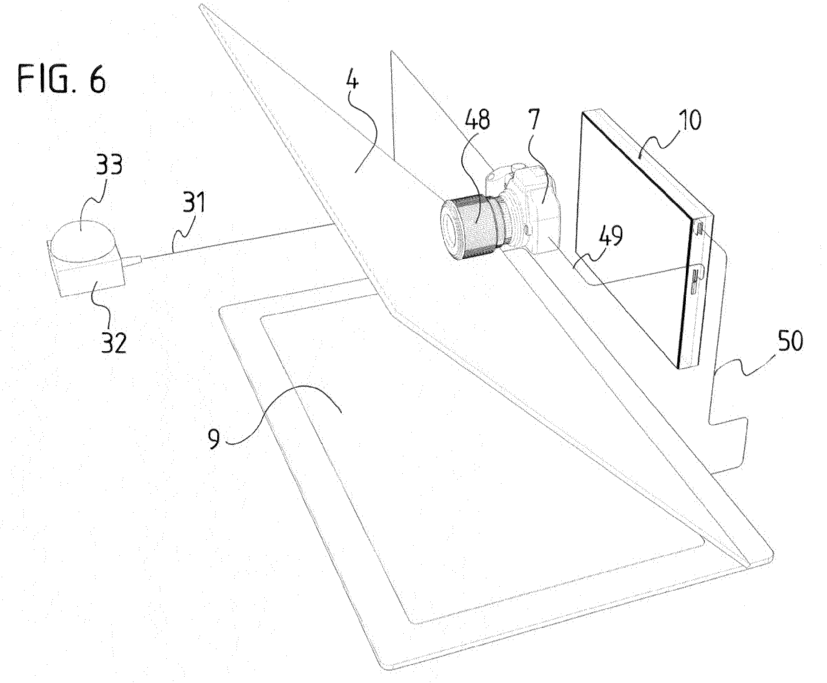

Die Figur 6 zeigt die Anordnung der für die Aufnahme wesentlichen Bestandteile. Da ist zunächst eine digitale Spiegelreflexkamera 7, die wahlweise mit verschiedenen Objekten 48 bestückt werden kann, je nach Bedarf. Das Ausgangskabel 49 der Kamera 7 führt zur Rechnereinheit 10, die ein handelsüblicher Laptop sein kann. Der Laptop verfügt natürlich über eine Batterieeinheit. Dadurch bleibt die Software auch bei kurzfristigen Stromausfällen aktiv und der Rechner muss nicht erneut hochgefahren werden. Sein Ausgangskabel 50 führt zum Bildschirm 9, der liegend ins Modul 1 eingebaut ist und dessen Boden bildet. Zur Kamera 7 führt des Weiteren das Auslöserkabel 31, in weichem das Auslösesignal mittels des Auslösers 32 mit einer Fusstaste 33 erzeugt wird.

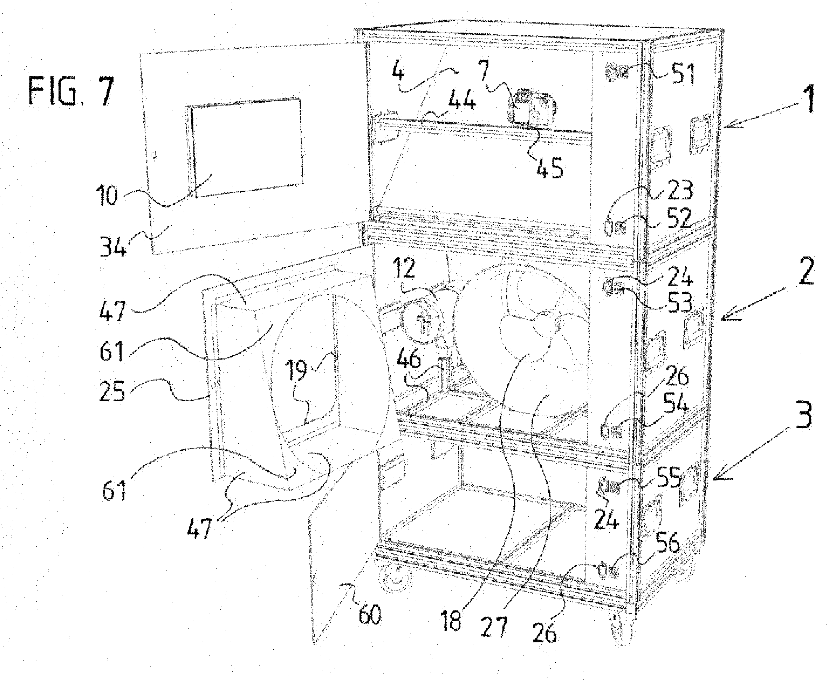

Die Figur 7 zeigt die Einrichtung aus den drei Modulen 1,2,3 von schräg hinten gesehen, mit geöffneten Hinterseiten, sodass der Blick ins Innere der Module 1,2,3 freigegeben ist. Man erkennt in dieser Ansicht, wie die Profile 44,45 als Halterung für die Kamera 7 in das Modul 1 eingebaut sind, sowie den geneigt eingebauten halbdurchlässigen Spiegel 4 von hinten. Die Rechnereinheit 10 ist an der Innenseite der Türe 34 befestigt, etwa an Profilen, in die sie von oben einschiebbar ist, sodass sie auch leicht entfernt werden kann. Im Falle eines Tablett-PCs als Rechnereinheit macht dieser ein auf dem liegenden Monitor synchrones Bild oder gibt eine tabellenförmige Übersicht der Aufnahmen durch das Fenster in der Türe nach aussen hin sichtbar ab. Im Falle eines solchen Tablett-PCs wird dieser durch einen Stift oder Fingerberührungen von aussen her gesteuert. Es ist auch eine Steuerung über zum Beispiel einen Magic-Pad möglich, das den Rechner über Bluetooth-Technologie steuert.

Im Modul 2 erkennt man den Ventilator 18, welcher im Innern des Rohrabschnittes 27 angeordnet ist, sowie einen der beidseits dieses Rohrabschnittes 27 angeordneten Blitzlicht-Erzeuger 12 mit den Profilen für seine Halterung 46. Die Türe 25, welche einen Teil der Rückwand des Moduls 2 bildet, trägt auf ihrer Innenseite die Leitbleche 47, welche ab der viereckigen Öffnung 19 in der Türe 25 einen Ansaugkanal für den Ventilator 18 bilden. Der geneigte Abschluss 61 dieses Luftansaugkanals schmiegt sich dann beim Schliessen der Türe 25 dichtend an den hinteren Rand des Rohrabschnittes 27 an.

Das unterste Modul 3 weist seinerseits eine Türe 60 in der Rückwand auf. Es ist hier leer. Wichtig sind jedoch die verschiedenen Steckdosen an allen Rückwänden der einzelnen Module 1,2,3. Sie ermöglichen es, die elektrischen Netzstrom-Verbindungen für die Module 1,2,3 rasch und sehr einfach durch Verbinden mit kurzen Kabelabschnitten mit beidseitigen Steckern erstellen. Die Schwachstrom-Steckdosen 51-56 dienen in gleicher Weise zur Verbindung aller anderen elektrischen Leitungen für die Steuerung der ganzen Einrichtung, also zur Steuerung der Blitzlicht-Erzeuger 12, des Ventilators 18, der Kamera 7 durch den Auslöser, sowie der Rechnereinheit 10. Das unterste Modul 3 kann bei Nichtgebrauch der Einrichtung und zum Transport zur Aufnahme des Auslöserkabels 31 und des Auslösers 32 mit seiner Fusstaste 33, sowie von Handbüchern und weiterer Utensilien wie etwa Verbindungs-Netzkabel, Schwachstromkabel, Verlängerungskabel etc. dienen.

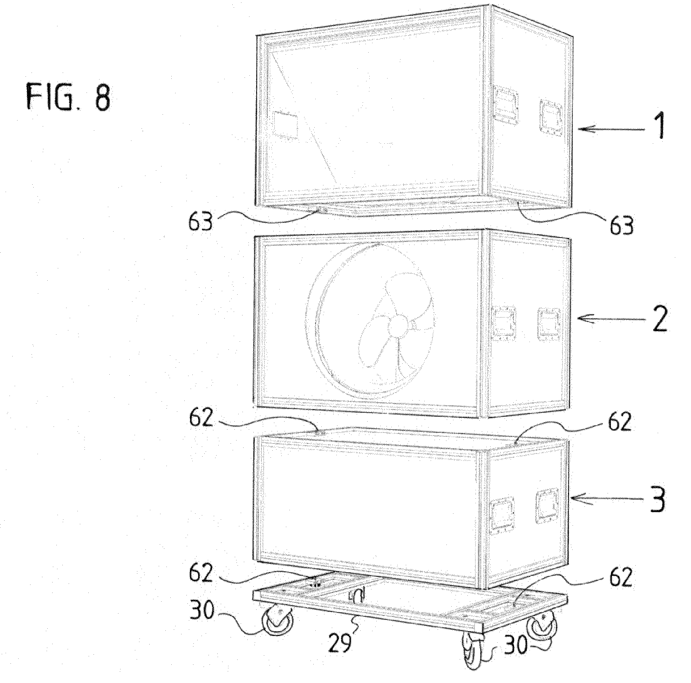

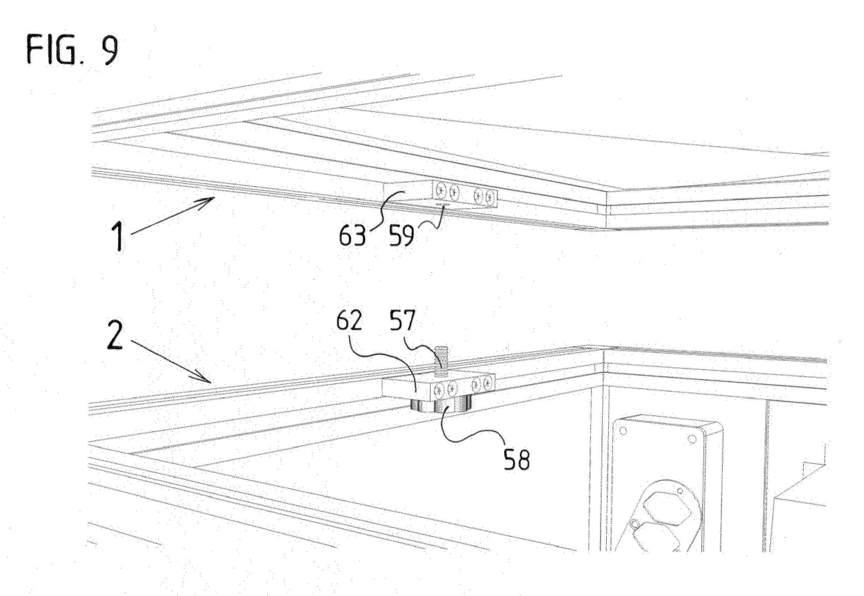

In der Figur 8 sieht man die drei Module 1,2,3 leicht voneinander abgehoben dargestellt. Diese Darstellung gibt den Blick frei auf den Fahrgestellrahmen 29 mit seinem freigelenkten Rädern 30, auf welchen je nach Bedarf das Modul 2 oder das Modul 3 abgestellt wird. Am oberen Rand des Moduls 3, wie auch an der Oberseite des Fahrwerk-Rahmens 29 erkennt man je zwei Verbindungselemente 62 für das Aufnehmen des darauf abzustellenden Moduls 2,3, und am unteren Rand des Moduls 1 sieht man die Gegenstücke 63 zu diesen Verbindungselementen 62, welche auch am unteren Rand des Moduls 2 vorhanden sind. Diese Verbindungselemente 62 und ihre Gegenstücke 63 sind anhand von Figur 9 näher vorgestellt. Die Verbindungselemente 62 schliessen eine Schraube 57 ein, mit einem Handgriff 58 zum Festziehen. Die jeweils darüber zu liegenden kommenden Gegenstücke 63 weisen eine Gewindebohrung 59 auf. Die Module 1,2,3 werden also vor Ort einfach passgenau übereinander gestellt, und hernach werden durch Öffnen der jeweiligen Türe an der Rückseite die Handgriffe 58 gedreht und die Schrauben 57 in die Gewindebohrungen 59 gedreht. Damit sind die Module sicher und satt, aber lösbar miteinander verbunden. Anstelle solcher Verbindungselemente 62 und Gegenstücke 63 können auch Schnallenverbindungen treten, die innen oder aussen an den Modulen angebracht sein können.

Ingesamt ist diese Einrichtung, unterteilt in diese mindestens zwei Module 1 und 2, sowie dem wahlweise einzusetzenden zusätzlichen Modul 3, sehr leicht an jeden beliebigen Ort transportierbar und dort vor Ort rasch aufstellbar und in Betrieb zu setzen. Es brauchen bloss einige elektrische Verbindungen hergestellt zu werden, die so gestaltet sind, dass sie narrensicher erstellbar sind. Die Einrichtung erlaubt es, von Einzelpersonen oder Personengruppen völlig zwanglos erstellte Bilder zu erzeugen, und diese sofort nach der Aufnahme zu sehen. Die Bilder werden auf einen Datenträger geschrieben. Sie können hernach auf einer Website gezeigt und ausgewählt werden. Wahlweise können die Daten physisch in Form einer DVD ans Publikum vor Ort abgegeben werden, die gleich gebrannt wird. Eleganter ist jedoch die sofortige Bereitstellung der Daten über einen Wireless-Router, so dass das Publikum die Bilder auf seinen eigenen Mobiltelefonen (iPhone, Android) vor Ort beliebig nachbetrachten kann.

## Patentansprüche

1. Einrichtung zum selbstauslösenden Erzeugen von Personen-Fotografien, mit einer Kamera (7), vor welcher ein halbdurchlässiger Spiegel (4) schiefwinklig angeordnet ist, einem Bildschirm (9) für das Aufnahmebild der Kamera, dessen Ebene seitlich verschobenen parallel zur Kamera-Linsenachse angeordnet ist, sodass der halbdurchlässige Spiegel (4) den Bildschirm (9) in Blickrichtung der zu fotografierenden Person abbildet und daher für diese Person einsehbar ist, und einem Selbstauslöser in Form eines am Ort der zu fotografierenden Person befindlichen Schalters (32),
***dadurch gekennzeichnet,***
**dass** die Einrichtung aus mindestens zwei passgenau unverrückbar aufeinander aufsetzbaren kastenförmigen Modulen (1,2) besteht, wobei das obere (1) auf seiner Frontseite (2) einsehbar im Innern den halbdurchlässigen Spiegel (4) enthält, welcher sich von der oberen Vorderkante (5) des kastenartigen Moduls (1) schiefwinklig zur hinteren Unterkante (6) des kastenartigen Moduls (1) erstreckt, und hinter diesem halbdurchlässigen Spiegel (4) die Kamera (7) mit Blickrichtung durch das Zentrum der Moduls (1) nach vorne angeordnet ist, auf dem Boden (8) des Moduls (1) der Bildschirm (9) mit Bild nach oben gerichtet angeordnet ist, und dass das untere Modul (2) eine diffus lichtdurchlässige Frontwand (11) aufweist, und im Innern dieses unteren Moduls (2) mindestens ein Blitzlicht-Erzeuger (12) angeordnet ist, und dass die Module (1,2) auf ihrer Aussenseite elektrisch für Netzstrom, Steuer- und Datenstrom verbindbar sind, sodass die Bilder vom kamerainternen Speicher aus wahlweise über ihre Multimedia-Schnittstelle (HDMI) direkt in den Bildschirm (9) oder an einen Rechner (10) übermittelbar sind.

2. Einrichtung zum selbstauslösenden Erzeugen von Personen-Fotografien nach Anspruch 1,
**dadurch gekennzeichnet, dass** der Rechner (10) zur Steuerung der Einrichtung und zur Verarbeitung und Speicherung der aufgenommen Bilder hinter dem halbdurchlässigen Spiegel (4) angeordnet ist.

3. Einrichtung zum selbstauslösenden Erzeugen von Personen-Fotografien nach einem der vorangehenden Ansprüche,
***dadurch gekennzeichnet,***
**dass** die Einrichtung ein zusätzliches drittes Modul (3) aufweist, zur Erreichung der Augenhöhe der Kamera (7) nach Draufstellen des Module (2) und des Moduls (1) mit der Kamera (7) auf dieses dritte Modul (3), und welches Modul (3), als Behälter für Zubehör zu wirken bestimmt ist.

4. Einrichtung zum selbstauslösenden Erzeugen von Personen-Fotografien nach einem der vorangehenden Ansprüche,
***dadurch gekennzeichnet,***
**dass** das Modul (2) mit dem mindestens einen Blitzlicht-Erzeuger (12) hinter der diffus lichtdurchlässigen Frontwand (11) eine geneigte, diffus lichtdurchlässige Scheibe (14) enthält, deren unterer Rand (15) längs des unteren Randes der Frontwand (11) verläuft, während sie von dieser Frontwand (11) um einen Winkel von 10° bis 30° nach hinten geneigt ist und ihr oberer Rand (16) entsprechend beabstandet vom oberen Rand der Fronseite (11) und parallel zu demselben verläuft.

5. Einrichtung zum selbstauslösenden Erzeugen von Personen-Fotografien nach einem der vorangehenden Ansprüche,
***dadurch gekennzeichnet,***
**dass** im Innern des Moduls (2) mit dem mindestens einen Blitzlicht-Erzeuger (12) zwei voneinander beabstandete Blitzlicht-Erzeuger (12) angeordnet sind, zum Abstrahlen von Blitzlicht gegen die Frontwand (11) hin.

6. Einrichtung zum selbstauslösenden Erzeugen von Personen-Fotografien nach einem der vorangehenden Ansprüche,
***dadurch gekennzeichnet,***
**dass** die Frontwand (11) sowie gegebenenfalls - wenn vorhanden - die zusätzliche geneigte lichtdurchlässige Scheibe (14) am Modul (2) ein zentrales Loch (17) aufweisen, welches von einem Rohrabschnitt (27) durchsetzt ist, und in diesem Rohrabschnitt (27) ein Ventilator (18) im Innern des Moduls (2) angeordnet ist, zum Erzeugen eines durch das Loch (17) ausströmenden Luftstroms, und wobei die Rückseite des Moduls (2) einen Luftansaugkanal mit Leitblechen (44) und einer Öffnung (19) bildet.

7. Einrichtung zum selbstauslösenden Erzeugen von Personen-Fotografien nach einem der Ansprüche 3 bis 6,
***dadurch gekennzeichnet,***
**dass** die Module (1,2,3) elektrisch miteinander verbindbar sind, und das Modul (3) ein von einer inliegenden Kabelrolle gegen Federkraft nahe am unteren Rand herausziehbares Steckerkabel von wenigstens 5 m Länge enthält, wobei das Kabel von der Kabelrolle nahe am oberen Rand des Moduls (3) über die Steckerdose (24) oben aus dem Modul (3) herausgeführt ist.

8. Einrichtung zum selbstauslösenden Erzeugen von Personen-Fotografien nach einem der Ansprüche 3 bis 6,
***dadurch gekennzeichnet,***
**dass** die Module (1,2,3) mit je einem Kabelabschnitt mit endseitigen Steckern elektrisch verbindbar sind, indem die Steckerdose (23) des Moduls (1) mit der Steckerdose (24) am Modul (2) verbindbar ist, die Steckerdose (26) des Moduls (2) mit der Steckerdose (24) des Moduls 3, und die Steckerdose (26) des Moduls (3) mit Netzstrom versorgbar ist.

9. Einrichtung zum selbstauslösenden Erzeugen von Personen-Fotografien nach einem der Ansprüche 1 bis 8,
***dadurch gekennzeichnet,***
**dass** das Module (2,3) auf einen Fahrwerksrahmen (29) mit frei gelenkten Rädern (30) aufsetzbar und mit demselben lösbar verbindbar ist.

10. Einrichtung zum selbstauslösenden Erzeugen von Personen-Fotografien nach einem der Ansprüche 1 bis 9,
***dadurch gekennzeichnet,***
**dass** die einzelnen Module (1,2,3) passgenau unverrückbar aufeinander aufsetzbar sind, indem am oberen Rand der Module (2,3) mindestens je zwei Verbindungselemente (62) für das Aufnehmen des darauf abzustellenden Moduls (1,2) angebracht sind, und am unteren Rand des Moduls (1,2,3) je ein Gegenstücke (63) zu diesen Verbindungselementen (62) angebracht ist, und dass die Verbindungselemente (62) eine Schraube (57) mit einem Handgriff (58) zum Festziehen einschliessen, wobei die Schraube (57) in eine Gewindebohrung (59) im darüber zu liegenden kommenden Gegenstücke (63) einpasst.

11. Einrichtung zum selbstauslösenden Erzeugen von Personen-Fotografien nach einem der vorangehenden Ansprüche,
***dadurch gekennzeichnet,***
**dass** die einzelnen Module (1,2,3) aus Aluminiumprofilen (41) bestehen, welche auf jeder Seite eine im Querschnitt T-förmige oder U-förmige Nut (42) aufweisen, und die Zwischenräume mit Platten aus Sperrholz oder Kunststoff gebildet sind, welche Platten von den Nuten (42) gehalten sind, und dass an den Stirnseiten der Module einklappbare Traggriffen (28) angebracht sind.
